# EUROPÄISCHE PATENTSCHRIFT

(11) **EP 1 453 645 B1**
(45) Veröffentlichungstag und Bekanntmachung des Hinweises auf die Patenterteilung: **19.07.2006**
(21) Anmeldenummer: 02791611.3
(22) Anmeldetag: 05.12.2002
(51) Int. Cl.: B29B 7/74, B29B 7/48, B29C 47/50

(54) **MEHRFACH-EXTRUDERANORDNUNG**
MULTIPLE EXTRUDER CONFIGURATION
CONFIGURATION D'EXTRUDEUR MULTIPLE

(30) Priorität: 07.12.2001 DE 10162076
(43) Veröffentlichungstag der Anmeldung: 08.09.2004
(73) Patentinhaber: Berstorff GmbH, 30625 Hannover (DE)
(72) Erfinder: UPHUS, Reinhard, 30419 Hannover (DE)
(74) Vertreter: Meissner, Peter E.
(86) Internationale Anmeldenummer: PCT/DE2002/004503
(87) Internationale Veröffentlichungsnummer: WO 2003/053646

(56) Entgegenhaltungen:
- EP-A- 1 086 986
- EP-A- 1 110 691
- DE-U- 29 710 235
- GB-A- 1 167 850
- US-A- 2 458 068

## Beschreibung

Die Erfindung betrifft eine Mehrfach-Extruderanordnung unter Verwendung von Doppelschneckenextrudern. Derartige Anordnungen sind z.B. aus der GB-A-1167850 und aus der EP-A-1110691 bekannt.

Es existieren in der Compoundierung viele Prozesse, die entweder drehmomentbegrenzt oder verweilzeitbegrenzt sind.

Beispiel für drehmomentbegrenzte Prozesse: kontinuierliches Mischen von Kautschukcompounds. Hierbei müssen die Drehzahlen des Doppelschneckenextruders so niedrig wie möglich gehalten werden, da ansonsten durch die sehr hohe Viskosität der Mischung Temperaturprobleme durch mechanische Dissipation in der Mischung entstehen. Bei diesen geringen Drehzahlen und eines akzeptablen Durchsatzes sind die an den Schneckenwellen herrschenden Drehmomente allerdings sehr hoch. Üblicherweise wird dann die Drehzahl bei konstantem Durchsatz so weit hochgenommen, dass das Drehmoment wenig unter dem maximal zulässigem Drehmoment liegt. Hierdurch wird die Massetemperatur jedoch wieder angehoben.

Beispiel für verweitzeitbegrenzte Prozesse: kontinuierliches Silanisieren einer kieseisäurehaitigen Kautschukmischung oder dynamische Vulkanisation vollvernetzter Thermoplastischer Vulkanisate (TPE-V).
In beiden Prozessen findet während der Extrusion mit dem Doppelschneckenextruder eine chemische Reaktion statt, die eine gewisse Verweilzeit (abhängig von der zulässigen mittleren Massetemperatur) verlangt.
Der Maschinenlänge bei Doppelschneckenextrudern ist durch die mit der Länge ansteigenden absoluten Torsion der Wellen bei ca. 60D eine Grenze gesetzt. Größere Längen würden einen ansteigenden Verschleiß bedeuten.

Weiter wird immer stärker gefragt, die fertig compoundierte Mischung im gleichen Arbeitsschritt über eine Düse auszuformen und/oder durch ein Siebpaket zu drücken um größere Partikel auszusieben. Beides bedeutet einen verhältnismäßig großen Druckaufbau. Der gleichsinnig rotierende Doppelschneckenextruder ist zwar für Mischaufgaben sehr gut geeignet, ist aber wegen seines geringen Pumpenwirkungsgrades nur sehr bedingt geeignet höhere Drücke aufzubauen. Bei höherviskosen Mischungen wird dann sehr viel Wärme durch Dissipation gebildet.

Aufgabe der Erfindung ist es, eine Mehrfach-Extruderanordnung zu schaffen, die einerseits eine hohe mittlere Verweilzeit für verweilzeitbegrenzte Prozesse zulässt und andererseits ein hohes Drehmoment in Bezug auf die Schneckenlänge für drehmomentbegrenzte Prozesse ermöglicht.
Dabei sollen die guten Mischeigenschaften eines gleichsinnig rotierenden Doppelschneckenextruders sowie das hervorragende Druckaufbauvermögen eines gegenläufigen Doppelschneckenextruders genutzt werden.

Geiöst wird diese Aufgabe erfindungsgemäß nach Anspruch 1 dadurch, dass zwei gleichsinnig rotierende Doppelschneckenextruder und ein gegensinnig rotierender Doppelschneckenextruder strömungsmäßig miteinander verbunden werden.

Nach einer ersten Ausgestaltung der Erfindung sind die zwei gleichsinnig rotierenden Doppelschneckenextruder und der gegensinnig rotierende Doppelschneckenextruder hintereinander angeordnet.
Auf diese Weise kann das Drehmoment pro Schneckenlänge bzw. die Verweilzeit verdoppelt werden. Der nachgeschaltete gegensinnig drehende Doppelschneckenextruder dient dann als Druckaufbauorgan.

Nach einer zweiten Ausgestaltung sind die zwei gleichsinnig rotierenden Doppelschneckenextruder parallel zueinander angeordnet, wobei die Schneckenpaare gleiche oder entgegengesetzte Drehrichtung aufweisen können und den beiden gleichsinnig rotierenden Doppeischneckenextrudem ist ein dem Druckaufbau dienender gegensinnig rotierender Doppelschneckenextruder nachgeschaltet.

Hierbei kann jeweils eine der unterschiedliche Drehrichtung aufweisenden Schneckenwellen eines jeden Schneckenpaares verlängert sein und in die Schneckenwelle eines nachgeschalteten Doppelschneckenextruders übergehen, wobei dessen Schneckenwellen dann gegensinnig rotieren.

Für diese Mehrfach-Extruderanordnung kann ein Antrieb eingesetzt werden, der vier Ausgangswellen aufweist, die mit den Schneckenwellen der gleichsinnig rotierenden Doppelschneckenextruder verbunden sind.

Es ist aber auch möglich, einen Antrieb mit sechs Ausgangswellen einzusetzen, der dann die Schneckenwelle einzeln antreibt.

Schließlich können bei einer derartigen Mehrfach-Extruderanordnung aber auch jeweils am Ende der Schneckenwellen Zahnräder vorgesehen sein, die derart miteinander kämmen, dass die Schneckenwellen der gleichsinnig rotierenden Doppelschneckenextruder die Schneckenwellen des gegensinnig rotierenden Doppeischneckenextruders antreiben.

Vorteilhaft ist hierbei die Anordnung von insgesamt sechs Zahnrädern, so dass jeweils die Zahnräder eines Doppelschneckenextruders mit einem Zahnrad an der Schneckenwelle des nachfolgenden gegensinnig rotierenden Doppelschneckenextruders und diese miteinander kämmen.

Die Erfindung soll an Ausführungsbeispielen erläutert werden.

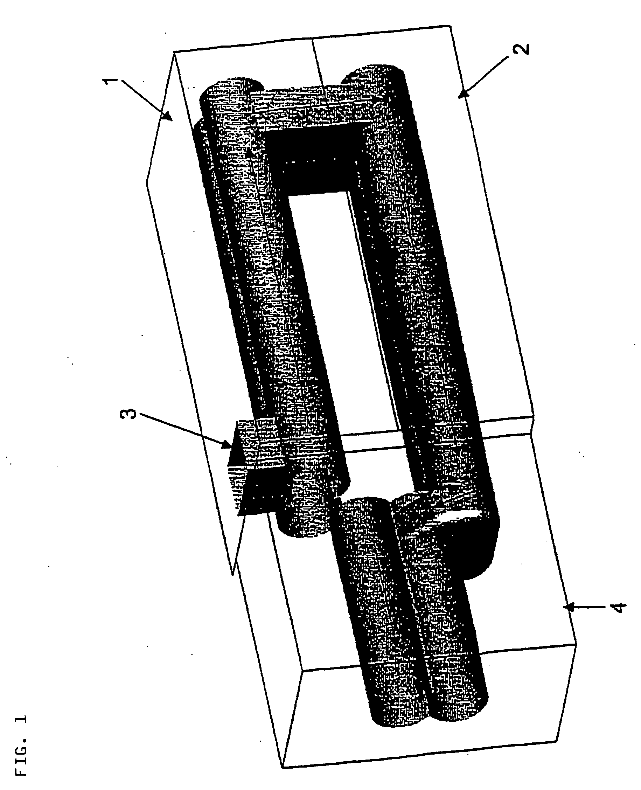

In der Figur 1 ist eine tviehrfach-Extruderanordnung dargestellt, bei der die zwei gleichsinnig laufenden Doppelschneckenextruder 1,2 parallel und übereinander angeordnet sind. Das zu extrudierende Material wird im oberen Extruder 1 bei 3 zugeführt. Nachdem es durch den ersten Extruder 1 hindurchgedrückt worden ist, wird es dem zweiten Extruder 2 zugeführt und gelangt schließlich in den als Gegeniäufer ausgebildeten gegensinnig drehenden Doppelschneckenextruder 4.

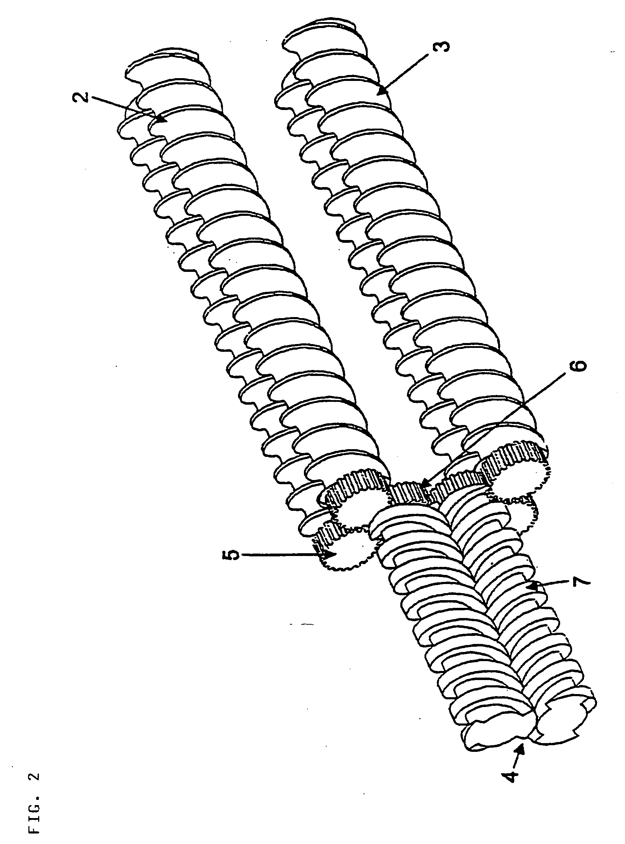

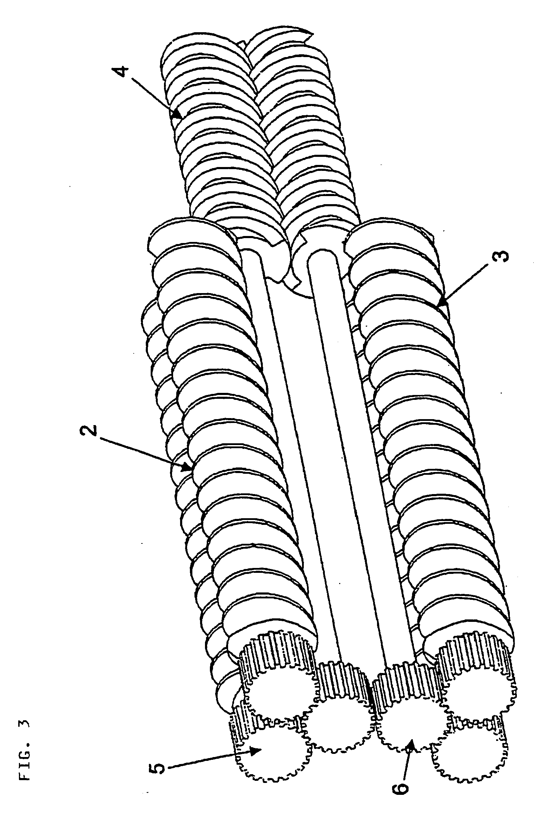

In den Figuren 2 und 3 ist der Strömungsverlauf des zu extrudierenden Materials wie bei der Ausführung nach Figur 1. Hier sind lediglich unterschiedliche Antriebsarten gezeigt, wobei in der Figur 2 die Schneckenwellen der gleichsinnig drehenden Extruder 2 und 3 von vier Abtriebswellen eines nicht dargestellten Antriebes angetrieben werden. Über Zahnräder 5, die am Ende jeder der Schneckenwellen angeordnet sind, werden zwei weitere Zahnräder 6 angetrieben, die ihrerseits in Schneckenwellen 7 des nachgeordneten gegensinnig drehenden Doppelschneckenextruders 4 übergehen.

Bei der Ausgestaltung nach Figur 3 wirkt der Antrieb auf die Zahnräder 5, die dann ebenfalls über die Zahnräder 6 die Schneckenwellen des nachgeordnete Doppelschneckenextruders 4 antreiben. Abweichend von der Ausgestaltung nach Figur 2, sind hierbei die Antriebswellen des gegensinnig drehenden Doppelschneckenextruders parallel zu den Schneckenpaaren der gleichsinnig drehenden Doppelschneckenextruder geführt. Die Zahnräder 6 können sich dabei miteinander in Eingriff befinden oder nicht.

Bei dieser Ausgestaltung nach Figur 3 kann der Antrieb auch auf die Zahnräder 6 wirken, die dann die Schneckenwellen der Schneckenextruder 2, 3 über die Zahnräder 5 antreiben. Der Antrieb erfolgt in diesem Fall über zwei Antriebswellen.

## Patentansprüche

1. Mehrfach-Extruderanordnung, **dadurch gekennzeichnet, dass** zwei gleichsinnig rotierende Doppelschneckenextruder zur Mischung des zu extrudierenden Materials und ein gegensinnig rotierender Doppelschneckenextruder als Druckaufbauorgan strömungsmäßig miteinander verbunden sind.

2. Mehrfach-Extruderanordnung nach Anspruch 1,
**dadurch gekennzeichnet,**
**dass** die zwei gleichsinnig rotierenden Doppelschneckenextruder und der gegensinnig rotierende Doppelschneckenextruder hintereinander angeordnet.

3. Mehrfach-Extruderanordnung nach Anspruch 1,
**dadurch gekennzeichnet,**
**dass** die zwei gleichsinnig rotierenden Doppelschneckenextruder parallel zueinander angeordnet sind, wobei die Schneckenpaare gleiche oder entgegengesetzte Drehrichtung aufweisen können, und dass den beiden gleichsinnig rotierenden Doppefschneckenextrudern ein dem Druckaufbau dienender gegensinnig rotierender Doppelschneckenextruder nachgeschaltet ist.

4. Mehrfach-Extruderanordnung nach Anspruch 3,
**dadurch gekennzeichnet,**
**dass** jeweils eine der unterschiedliche Drehrichtungen aufweisenden Schneckenwellen eines jeden Schneckenpaares verlängert ist und in die Schneckenwelle des nachgeschalteten Doppelschneckenextruders übergehen, so dass dessen Schneckenwellen dann gegensinnig rotieren.

5. Mehrfach-Extruderanordnung nach Anspruch 4,
**dadurch gekennzeichnet,**
**dass** ein Antrieb vorgesehen ist, der vier Ausgangswellen aufweist, die mit den Schneckenwellen der gleichsinnig rotierenden Doppelschneckenextruder verbunden sind.

6. Mehrfach-Extruderanordnung nach Anspruch 4,
**dadurch gekennzeichnet,**
**dass** ein Antrieb mit sechs Ausgangswellen vorgesehen ist, so dass die Schneckenwellen einzeln antreibbar sind

7. Mehrfach-Extruderanordnung nach Anspruch 3,
**dadurch gekennzeichnet,**
**dass** jeweils am Ende der Schneckenwellen Zahnräder angeordnet sind, die derart miteinander kämmen, dass die Schneckenwellen der gleichsinnig rotierenden Doppelschneckenextruder die Schneckenwellen des gegensinnig rotierenden Doppelschneckenextruders antreiben.

8. Mehrfach-Extruderanordnung nach Anspruch 7,
**dadurch gekennzeichnet,**
**dass** insgesamt sechs Zahnrädern vorgesehen sind, die derart miteinander kämmen, dass jeweils die Zahnräder eines Doppelschneckenextruders mit einem Zahnrad an der Schneckenwelle des nachfolgenden gegensinnig rotierenden Doppetschneckenextruders und diese miteinander kämmen.

## Claims

1. A multiple-extruder configuration, **characterised in that** two twin-screw extruders rotating in the same direction for mixing the material to be extruded and one twin-screw extruder rotating in the opposite direction as a pressure build-up element are connected together in terms of flow.

2. A multiple-extruder configuration according to Claim 1, **characterised in that** the two twin-screw extruders rotating in the same direction and the twin-screw extruder rotating in the opposite direction [are] arranged in series.

3. A multiple-extruder configuration according to Claim 1, **characterised in that** the two twin-screw extruders rotating in the same direction are arranged parallel to one another, with the pairs of screws possibly having the same or opposing directions of rotation, and that the two twin-screw extruders rotating in the same direction are succeeded by a twin-screw extruder rotating in the opposite direction which serves to build up pressure.

4. A multiple-extruder configuration according to Claim 3, **characterised in that** in each case one of the screw shafts of each pair of screws which have different directions of rotation is extended and merges into the screw shaft of the subsequent twin-screw extruder, so that the screw shafts thereof then rotate in opposite directions.

5. A multiple-extruder configuration according to Claim 4, **characterised in that** a drive means is provided having four output shafts which are connected to the screw shafts of the twin-screw extruders rotating in the same direction.

6. A multiple-extruder configuration according to Claim 4, **characterised in that** a drive means having six output shafts is provided, so that the screw shafts can be driven individually.

7. A multiple-extruder configuration according to Claim 3, **characterised in that** gear wheels are arranged in each case at the end of the screw shafts, which wheels mesh with each other such that the screw shafts of the twin-screw extruders rotating in the same direction drive the screw shafts of the twin-screw extruder rotating in the opposite direction.

8. A multiple-extruder configuration according to Claim 7, **characterised in that** a total of six gear wheels are provided which mesh with each other such that in each case the gear wheels of a twin-screw extruder mesh with a gear wheel on the screw shaft of the subsequent twin-screw extruder rotating in the opposite direction and these mesh with one another.

## Revendications

1. Agencement d'extrudeuses multiples,
**caractérisé en ce que** deux extrudeuses à double vis tournant dans le même sens servant à mélanger la matière à extruder et une extrudeuse à double vis tournant dans le sens inverse faisant office d'organe de montée en pression sont reliées entre elles pour permettre l'écoulement de la matière.

2. Agencement d'extrudeuses multiples selon la revendication 1,
**caractérisé en ce que** les deux extrudeuses à double vis tournant dans le même sens et l'extrudeuse à double vis tournant dans le sens inverse sont agencées les unes derrière les autres.

3. Agencement d'extrudeuses multiples selon la revendication 1,
**caractérisé en ce que** les deux extrudeuses à double vis tournant dans le même sens sont agencées parallèlement entre elles, les paires de vis pouvant présenter un sens de rotation identique ou opposé, et **en ce qu'**une extrudeuse à double vis tournant dans le sens inverse et servant à la montée en pression est installée en aval des deux extrudeuses à double vis tournant dans le même sens.

4. Agencement d'extrudeuses multiples selon la revendication 3,
**caractérisé en ce que** l'un des arbres de vis présentant des sens de rotation différents de chaque paire de vis est prolongé pour devenir l'arbre de vis de l'extrudeuse à double vis installée en aval, de telle manière que les arbres de vis de celle-ci tournent alors dans le sens inverse.

5. Agencement d'extrudeuses multiples selon la revendication 4,
**caractérisé en ce qu'**il est prévu une commande, laquelle présente quatre arbres de sortie qui sont reliés aux arbres de vis des extrudeuses à double vis tournant dans le même sens.

6. Agencement d'extrudeuses multiples selon la revendication 4,
**caractérisé en ce qu'**il est prévu une commande comportant six arbres de sortie, de sorte que les arbres de vis peuvent être entraînés individuellement.

7. Agencement d'extrudeuses multiples selon la revendication 3,
**caractérisé en ce que**, à l'extrémité de chaque arbre de vis, il est agencé des roues dentées qui s'engrènent les unes dans les autres de telle manière que les arbres de vis des extrudeuses à double vis tournant dans le même sens entraînent les arbres de vis de l'extrudeuse à double vis tournant dans le sens inverse.

8. Agencement d'extrudeuses multiples selon la revendication 7,
**caractérisé en ce qu'**il est prévu en tout six roues dentées qui s'engrènent les unes dans les autres de telle manière que les roues dentées d'une extrudeuses à double vis s'engrènent dans une roue dentée montée sur l'arbre de vis de l'extrudeuse à double vis tournant dans le sens inverse et lui faisant suite et que celles-ci s'engrènent les unes dans les autres.
